# EUROPÄISCHE PATENTSCHRIFT

(11) **EP 2 609 405 B1**
(45) Veröffentlichungstag und Bekanntmachung des Hinweises auf die Patenterteilung: **28.01.2015**
(21) Anmeldenummer: 11760978.4
(22) Anmeldetag: 26.08.2011
(51) Int. Cl.: G01G 23/37, G01G 17/06

(54) **VERFAHREN UND VORRICHTUNG ZUR ERFASSUNG DES GEWICHTS EINES DRAHTVORRATS**
METHOD AND DEVICE FOR DETECTING THE WEIGHT OF A WIRE SUPPLY
PROCÉDÉ ET DISPOSITIF POUR ENREGISTRER LE POIDS D'UNE RÉSERVE DE FIL

(30) Priorität: 26.08.2010 AT 14272010
(43) Veröffentlichungstag der Anmeldung: 03.07.2013
(73) Patentinhaber: Fronius International GmbH, 4643 Pettenbach (AT)
(72) Erfinder: RÜHRNÖSSL, Manfred, A-4030 Linz (AT); KRUGLHUBER, Wolfgang, A-4910 Ried/Innkreis (AT); KOHLWEISS, Philipp, A-5541 Altenmarkt (AT); KIRCHMAYR, Gerhard, A-4060 Leonding (AT)
(74) Vertreter: Sonn & Partner Patentanwälte
(86) Internationale Anmeldenummer: PCT/AT2011/000355
(87) Internationale Veröffentlichungsnummer: WO 2012/024713

(56) Entgegenhaltungen:
- EP-A2- 0 468 953
- WO-A1-82/03554
- US-A- 4 013 194
- US-A- 4 869 367
- US-B1- 6 222 137

## Beschreibung

Die Erfindung betrifft einen Fahrwagen zur Anordnung einer Vorratseinheit mit einem Drahtvorrat, mit daran angeordneten Rädern oder dergl., mit einer Einrichtung zur Messung des Gewichts der Vorratseinheit samt Drahtvorrat, einer mit der Messeinrichtung verbundenen Einrichtung zur Auswertung der Messwerte und einer Anzeige zur Anzeige der Unterschreitung eines vorgegebenen Restwerts des Gewichts des Drahtvorrats.

Die Erfindung betrifft weiters ein Verfahren zur Erfassung des Gewichts eines in einer Vorratseinheit befindlichen Drahtvorrats, welche Vorratseinheit mit dem Drahtvorrat auf einer beweglichen Messplattform eines oben genannten Fahrwagens angeordnet wird.

Bei verschiedenen Produktionsverfahren werden verschiedene Drähte zur Produktion verwendet, welche in entsprechenden Vorratseinheiten angeordnet sind. Beispielsweise ist bei Schweißverfahren mit abschmelzendem Schweißdraht die Zuführung des Schweißdrahts erforderlich. Bei automatischen Schweißanlagen wird der Schweißdraht in entsprechenden Vorratseinheiten, wie z.B. Drahtfässern, Spulen, Trommeln oder dergl., zur Verfügung gestellt. Die Schweißdrähte werden beispielsweise in Einheiten mit einem Gewicht von 250kg zur Verfügung gestellt. Je nach Schweißgeschwindigkeit und zu verschweißenden Gegenständen wird der Drahtvorrat unterschiedlich rasch aufgebraucht. Um den Produktionsvorgang nur möglichst kurz unterbrechen zu müssen, ist es wichtig, das Ende des Drahtvorrats bekannt zu geben, sodass ein Wechsel der Vorratseinheit rechtzeitig eingeleitet und vorgenommen werden kann.

Der Wechsel des Drahtvorrats kann manuell, teilautomatisch oder auch vollautomatisch erfolgen. Die AT 10 622 U1 beschreibt beispielsweise ein Verfahren und eine Vorrichtung zum Fördern eines Zusatzwerkstoffes, wobei der Wechsel des Zusatzwerkstoffes, insbesondere des Schweißdrahts, automatisch durchgeführt wird.

Es sind Verfahren und Vorrichtungen bekannt, welche erst knapp vor Ende des Drahtvorrats dieses anzeigen. Beispielsweise kann dies durch entsprechende Indikatoren oder Sensoren am Ende des Drahtvorrats vorgenommen werden. Die entsprechenden Schritte zur Einleitung oder Durchführung des Wechsels des Drahtvorrats müssen nach dieser Anzeige des Endes des Drahtvorrats eingeleitet werden, weshalb es zu Verzögerungen und längeren Stillständen der Produktionsanlage, insbesondere der Schweißanlage, und somit zu Produktionsausfällen kommen kann.

Darüber hinaus kann es zu Qualitätseinbußen der hergestellten Produkte kommen, wenn der Herstellungsprozess unterbrochen werden muss, da das Ende des Drahtvorrats zu spät erkannt wurde. Beispielsweise muss eine Schweißnaht unterbrochen werden, wenn der Schweißdraht während des Schweißvorgangs ausgeht und nach Wechsel des Schweißdrahts der Schweißvorgang fortgesetzt wird.

Die EP 468 953 A2 beschreibt ein Verfahren und eine Vorrichtung zum automatischen oder halbautomatischen Schweißen, wobei das Gewicht des Schweißdrahts in einer Vorratseinheit ermittelt wird, um Stillstände bei Vorratsersatz und Unterbrechungen größerer Schweißungen zu minimieren. Bei Kenntnis des jeweiligen Gewichts des Drahtvorrats kann rechtzeitig ein Wechsel des Drahtvorrats eingeleitet werden. Nachteilig bei diesem Verfahren und dieser Vorrichtung ist, dass aufgrund des relativ hohen Messbereichs über das Gesamtgewicht der Vorratseinheit die Genauigkeit, insbesondere bei zu Ende gehendem Drahtvorrat relativ gering ist. Zum Ausgleich derartiger Ungenauigkeiten wird eine höhere Toleranz zugelassen, weshalb ein Drahtwechsel üblicherweise früher als notwendig vorgenommen wird und der verbleibende Drahtvorrat in der auszuwechselnden Vorratseinheit nicht genutzt und weggeworfen wird.

Die WO 82/03554 A1 betrifft ein System zur Überwachung des Flusses eines Fluids, wobei eine Einrichtung zur Messung des Gewichts des Fluids vorgesehen ist.

Die US 6,222,137 B1 zeigt eine Waage für das Messen des Gewichts von Gegenständen, wie z.B. Fässern.

Die Aufgabe der vorliegenden Erfindung besteht daher in der Schaffung eines oben genannten Fahrwagens und Verfahrens zur Erfassung des Gewichts eines in einer Vorratseinheit befindlichen Drahtvorrats, wodurch aufgrund des ermittelten, optimalen Wechselzeitpunkts die Standzeiten beim Wechsel des Drahtvorrats minimiert werden können und die Menge des ungenutzten Drahtvorrats reduziert werden kann.

Nachteile bekannter Verfahren und Vorrichtungen sollen vermieden oder zumindest reduziert werden.

Gelöst wird die erfindungsgemäße Aufgabe durch einen oben genannten Fahrwagen, wobei eine bewegliche Messplattform zur Anordnung der Vorratseinheit samt Drahtvorrat vorgesehen ist und die Messeinrichtung zwischen der Messplattform und einer unteren Plattform angeordnet und zur Messung des Gewichts der Vorratseinheit mit dem Drahtvorrat unterhalb eines Schwellwerts des Gewichts der Vorratseinheit samt Drahtvorrat und zur Anzeige des maximalen Messwerts bei Überschreitung des Gewichts der Vorratseinheit samt Drahtvorrat über den Schwellwert ausgebildet ist. Dies stellt eine Konstruktion dar, welche die erfindungsgemäße Eingrenzung des Messbereichs einfach ermöglicht. Dadurch kann der Messbereich reduziert und die Genauigkeit der Gewichtsmessung und somit der Längenerfassung des Drahts wesentlich erhöht werden. Bei einem Gewicht der Vorratseinheit samt Drahtvorrat über dem Schwellwert wird die Messeinrichtung nicht eingesetzt bzw. deaktiviert und somit vor Überlastung geschützt. Die Messbereichsbegrenzung kann durch verschiedene mechanische oder auch elektronische Konstruktionen realisiert werden. Somit spielt es auch keine Rolle, welches Gesamtgewicht die Vorratseinheit aufweist, da der Gewichtsmessbereich begrenzt wird und oberhalb dieser Grenze keine Messung erfolgt.

Beispielsweise kann der Schwellwert durch eine Einrichtung zur Aufbringung einer dem Schwellwert entsprechenden Gegenkraft auf das Gewicht der Messplattform samt Vorratseinheit mit dem Drahtvorrat eingestellt werden und die Messeinrichtung zur Messung des Gewichts der Messplattform samt Vorratseinheit mit dem Drahtvorrat unterhalb dieser Gegenkraft ausgebildet sein und bei Überschreitung des Gewichts der Messplattform mit der Vorratseinheit samt Drahtvorrat die Messplattform am Rahmen aufliegen. Dies ist eine mögliche robuste Ausgestaltung, bei der die Messeinrichtung durch das Aufliegen der Messplattform am Rahmen sicher vor Überlastung geschützt wird und erst bei Unterschreiten des Gewichts unter den vorgegebenen Schwellwert die Messung begonnen wird. Damit wird die Messwertauflösung wesentlich verbessert, da der Messbereich nur noch für den unteren Teilbereich ausgelegt werden muss und nicht mehr auf das Gesamtgewicht des Drahtvorrates.

Die Einrichtung zur Aufbringung einer Gegenkraft kann beispielsweise durch zumindest ein vorzugsweise zwischen dem Rahmen und der unteren Plattform mit der Messeinrichtung angeordnetes Federelement gebildet sein. Beispielsweise können vier Spiralfedern vorgesehen sein, die bei Überschreitung des Schwellwerts des Gewichts vollständig komprimiert sind und erst bei Unterschreitung des Schwellwerts des Gewichts die Messplattform vom Rahmen anheben und die Messeinrichtung freigeben. Damit wird eine automatische Aktivierung der Messeinrichtung geschaffen, indem durch das Anheben der Plattform im Wesentlichen die Messeinrichtung zu messen beginnt.

Vorteilhafterweise enthält die Messeinrichtung Dehnungsmessstreifen. Die entsprechend angebrachten Dehnungsmessstreifen ändern aufgrund von Verformungen ihren elektrischen Widerstand, welcher für einen Rückschluss auf das Gewicht der Vorratseinheit entsprechend verarbeitet wird.

Gemäß einem weiteren Merkmal der Erfindung ist eine Einrichtung zur Erkennung eines an der Vorratseinheit befindlichen Identifikationselements vorgesehen und mit der Messeinrichtung oder der Auswerteeinrichtung verbunden. Auf dem Identifikationselement, welches beispielsweise durch einen Barcode oder RFID-Transponder gebildet sein kann, sind wichtige Kenndaten über die Vorratseinheit und darin befindlichen Drahtvorrat, wie z.B. das Leergewicht der Vorratseinheit, die Gesamtlänge des Drahtvorrats, das Material und der Durchmesser des Drahts und/oder dergl., gespeichert, die zur Auswertung der gemessenen Daten und für eine Berechnung der aktuellen Länge des Drahts in der Vorratseinheit erforderlich sind. Dabei müssen im Identifikationselement nicht gezwungenermaßen die Kenndaten selbst enthalten bzw. gespeichert sein, sondern es kann sich auch nur eine eindeutige Kennung auf dem Identifikationselement befinden, über welche die entsprechenden Kenndaten aus einer Tabelle oder einer entsprechenden Datenbank extrahiert werden können.

Vorteilhafterweise ist die Messeinrichtung mit einer Schnittstelle zur Übertragung der Messwerte des Gewichts an die Auswertungseinrichtung oder ein Datennetz verbunden. Die erfassten Messwerte des Gewichts der Vorratseinheit samt Drahtvorrat können drahtlos oder drahtgebunden zu einer Auswerteeinrichtung, welche nicht gezwungenermaßen an der Vorrichtung selbst angeordnet sein muss, oder über ein Datennetz zu anderen Stellen übermittelt werden.

Wenn die Schnittstelle zur Übertragung der Messwerte durch eine Steckverbindung zur drahtgebundenen Übertragung der Messwerte des Gewichts zur Auswerteeinrichtung oder das Datennetz ausgebildet ist, können Übertragungsfehler durch elektromagnetische Störungen verhindert werden.

Um den Benutzer laufend über die aktuelle Länge des noch verbleibenden Drahtvorrats informieren zu können, ist es von Vorteil, wenn die Auswerteeinrichtung zur Berechnung der Länge des Drahtvorrats aufgrund des gemessenen Gewichts und gespeicherter Kenndaten ausgebildet ist. Wie bereits oben erwähnt, kann bei Kenntnis des Leergewichts der Vorratseinheit des Durchmessers und des Materials des Drahts aus dem Gewicht auf die Länge des Drahts rückgerechnet werden.

Es kann weiters von Vorteil sein, wenn in der Vorrichtung ein Speicher zur Speicherung der Messwerte vorgesehen ist. Dadurch stehen die Messwerte für spätere Auswertungen zur Verfügung.

Vorteilhafterweise ist zumindest ein Andockelement zum Andocken an ein entsprechendes Gegenstück vorgesehen. Über das Andockelement und entsprechende Steckverbindungen können die Messdaten der Erfassungsvorrichtung vom Fahrwagen, beispielsweise zu einem Schweißgerät oder dergl. übermittelt werden. Weiters kann eine Versorgung der im Fahrwagen enthaltenen elektronischen Komponenten mit elektrischer Energie über eine im Andockelement enthaltene Steckverbindung durchgeführt werden.

Gelöst wird die erfindungsgemäße Aufgabe in verfahrensmäßiger Hinsicht dadurch, dass das Gewicht der Vorratseinheit samt Drahtvorrat mit einer zwischen der beweglichen Messplattform und einer unteren Plattform angeordneten Messeinrichtung gemessen und einer Auswerteeinrichtung zugeführt wird, wobei die Messung des Gewichts der Vorratseinheit samt Drahtvorrat unterhalb eines Schwellwerts des Gewicht vorgenommen wird, während bei Überschreitung des Schwellwerts des Gewichts der maximale Messwert angezeigt wird, und die Unterschreitung eines vorgegebenen Restwerts des Gewichts des Drahtvorrats angezeigt wird. Erfindungsgemäß ist somit vorgesehen, dass die Gewichtsmessung des Drahtvorrats erst bei einem gewissen Teilgewicht des Drahtvorrats vorgenommen wird. Durch diese Reduktion des Messbereichs kann eine höhere Genauigkeit der Messung im unteren Gewichtsbereich, der ja für einen Drahtwechsel interessant ist, erzielt werden. Das Gewicht des Drahtvorrats im Bereich oberhalb des Schwellwerts wird nicht in quantitativer Form erfasst, sondern lediglich der maximale Messwert angezeigt, womit dem Benutzer mitgeteilt wird, dass das Gewicht oberhalb des Schwellwerts liegt. Beispielsweise kann die Messung bei einem Schweißdrahtvorrat, welcher in vollem Zustand ein Gesamtgewicht von 250kg aufweist, erst bei Unterschreitung eines Schwellwerts von 100kg vorgenommen werden. Innerhalb des Messbereichs von 100kg kann die Messung mit hoher Genauigkeit vorgenommen werden und bei Kenntnis des Leergewichts der Vorratseinheit und der Dicke und des Materials des Drahts sehr genau auf die verbleibende Restlänge des Drahts, insbesondere Schweißdrahts rückgeschlossen werden. Auch wird dadurch erreicht, dass auf die Größe, insbesondere auf das Gesamtgewicht der eingesetzten Vorratseinheit des Schweißdrahts, keine Rücksicht genommen werden muss, sodass beispielsweise unterschiedliche Vorratseinheiten mit 250kg oder auch 500kg ohne mechanische Anpassungen eingesetzt werden können. Entsprechend ist dadurch die Genauigkeit der Gewichtsabfrage weiterhin gewährleistet und unabhängig vom Gesamtgewicht. Aufgrund der relativ genauen Kenntnis der verbleibenden Restlänge des Drahtvorrats kann bei genauer Kenntnis des Produktionsprogramms bzw. Schweißprogramms genau abgeschätzt bzw. berechnet werden, ob sich ein bestimmter Schweißvorgang eines Werkstücks mit der verbleibenden Schweißdrahtlänge noch ausgeht oder die Vorratseinheit mit dem Drahtvorrat vor Einleitung des Schweißverfahrens gewechselt werden muss. Somit kann ein optimaler Wechselzeitpunkt der Vorratseinheit festgelegt werden. Die Messwerte des Gewichts der Vorratseinheit samt Drahtvorrat können drahtlos oder leitungsgebunden der Auswerteeinrichtung zugeführt werden. Die Unterschreitung des vorgegebenen Restwerts des Gewichts des Drahtvorrats kann akustisch oder optisch angezeigt werden.

Der Schwellwert des Gewichts kann durch Aufbringen einer Gegenkraft auf die Vorratseinheit samt Drahtvorrat eingestellt werden und die Messung des Gewichts der Vorratseinheit samt Drahtvorrat erst bei Unterschreitung des Gewichts der Vorratseinheit samt Drahtvorrat unterhalb des Schwellwerts vorgenommen werden, wobei die Vorratseinheit durch die Gegenkraft angehoben wird. Dadurch wird erreicht, dass erst bei Unterschreitung des Gewichts der Vorratseinheit samt Drahtvorrat unter den durch die Gegenkraft eingestellten Schwellwert die Messung vorgenommen wird, wohingegen bei höherem Gewicht der Vorratseinheit samt Drahtvorrat die Messeinrichtung vor Überlastung geschützt wird. Die Gegenkraft kann durch verschiedene Maßnahmen, wie z.B. entsprechende Spiralfedern, aufgebracht werden.

Wenn Kenndaten der Vorratseinheit und des Drahtvorrats, beispielsweise das Leergewicht der Vorratseinheit, die Länge des Drahtvorrats, das Material und der Durchmesser des Drahts, oder dergl. eingegeben, berechnet und/oder ausgewählt und der Auswerteeinrichtung zugeführt werden, kann über das Gewicht der Vorratseinheit samt Drahtvorrat sehr genau die verbleibende Länge des Drahtvorrats berechnet werden.

Vorteilhafterweise werden die Kenndaten der Vorratseinheit und des Drahtvorrats automatisch erfasst und der Auswerteeinrichtung zugeführt.

Für die automatische Erfassung der Kenndaten der Vorratseinheit kann beispielsweise ein an der Vorratseinheit befindliches Identifikationselement ausgelesen und die entsprechenden Daten der Auswerteeinrichtung zugeführt werden. Das Identifikationselement kann beispielsweise durch einen Barcode oder einen RFID-Transponder gebildet sein.

Vorteilhafterweise wird aus dem erfassten Gewicht der Vorratseinheit samt Drahtvorrat unter Berücksichtigung der oben genannten Kenndaten der Vorratseinheit und des Drahtvorrats die aktuelle Länge des Drahtvorrats berechnet. Die berechnete aktuelle Länge des verbleibenden Drahtvorrats kann permanent angezeigt oder auch nur auf Anfrage zur Verfügung gestellt werden.

Vorteilhafterweise wird bei Unterschreitung des vorgegebenen Restwerts des Gewichts des Drahtvorrats ein automatischer Wechsel der Vorratseinheit vorgenommen oder eingeleitet. Beispielsweise kann eine Vorschubeinheit automatisch zu einer neuen Vorratseinheit bewegt und der Drahtvorrat dieser neuen Vorratseinheit aufgenommen und beispielsweise dem Schweißgerät zugeführt werden. Ein solcher automatischer Wechsel einer Vorratseinheit ist beispielsweise in der AT 10 622 U1 beschrieben.

Die vorliegende Erfindung wird anhand der beigefügten Zeichnungen näher erläutert.

Darin zeigen:
- Fig. 1: eine schematische Darstellung eines Schweißgeräts;
- Fig. 2: eine teilweise geschnittene und schematische Darstellung einer Ausführungsform einer Vorrichtung zur Erfassung des Gewichts eines Drahtvorrats in einer unteren Position;
- Fig. 3: eine teilweise geschnittene und schematische Darstellung einer Ausführungsform einer Vorrichtung zur Erfassung des Gewichts eines Drahtvorrats in einer mittleren Position;
- Fig. 4: eine teilweise geschnittene und schematische Darstellung einer Ausführungsform einer Vorrichtung zur Erfassung des Gewichts eines Drahtvorrats in einer oberen Position;
- Fig. 5: eine weitere teilweise geschnittene Ansicht auf eine als Fahrwagen ausgebildete Vorrichtung zur Erfassung des Gewichts eines Drahtvorrats; und
- Fig. 6: einen schematischen Verlauf eines nach dem erfindungsgemäßen Verfahren resultierenden Messsignals in Abhängigkeit des Gewichts eines Drahtvorrats.

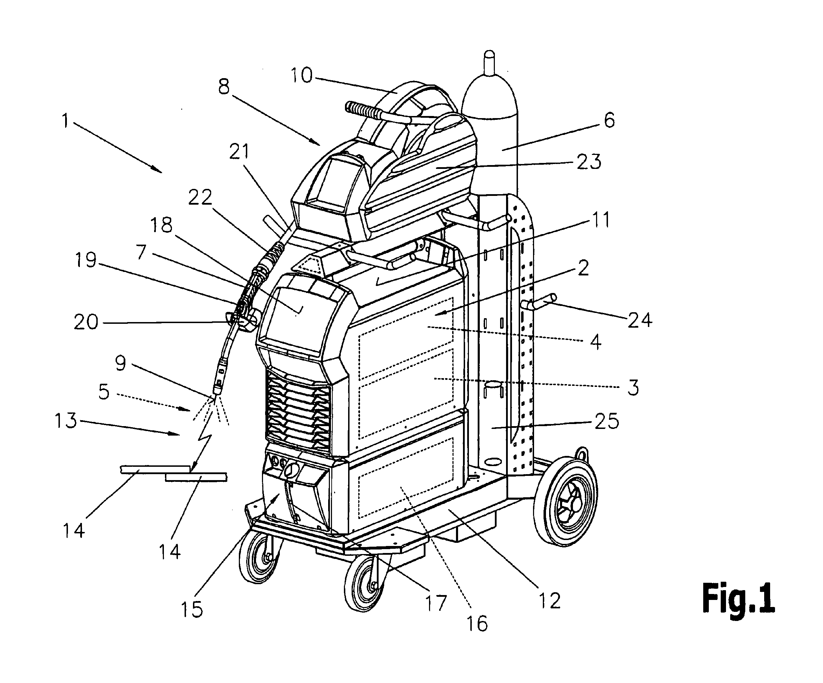

Fig. 1 zeigt ein Schweißgerät 1 für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw.. Das Schweißgerät 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventilen, usw.. Die Steuervorrichtung 4 ist beispielsweise mit einem Steuerventil verbunden, welches in einer Versorgungsleitung für ein Gas 5, insbesondere ein Schutzgas, wie beispielsweise CO₂, Helium oder Argon und dergl., zwischen einem Gasspeicher 6 und einem Schweißbrenner 7 bzw. einem Brenner angeordnet ist. Zudem kann über die Steuervorrichtung 4 noch ein Drahtvorschubgerät 8, welches für das MIG/MAG-Schweißen üblich ist, angesteuert werden, wobei über eine Versorgungsleitung ein Zusatzwerkstoff bzw. ein Schweißdraht 9 von einer Vorratstrommel 10 bzw. einer Drahtrolle in den Bereich des Schweißbrenners 7 zugeführt wird. Selbstverständlich kann das Drahtvorschubgerät 8, im Schweißgerät 1, insbesondere im Gehäuse 11 der Stromquelle 2, integriert und nicht, wie in Fig. 1 dargestellt, als Zusatzgerät auf einem Fahrwagen 12 positioniert sein. Weiters kann das Drahtvorschubgerät 8 auch direkt auf das Schweißgerät 2 aufgesetzt werden, indem das Gehäuse 11 der Stromquelle 2 an der Oberseite zur Aufnahme des Drahtvorschubgeräts 8 ausgebildet ist. In diesem Fall kann der Fahrwagen 12 auch entfallen.

Das Drahtvorschubgerät 8 kann den Schweißdraht 9 auch außerhalb des Schweißbrenners 7 an die Prozessstelle zuführen, wobei im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13 zwischen der Elektrode bzw. dem Schweißdraht 9 und einem Werkstück 14 wird über eine Schweißleitung (nicht dargestellt) vom Leistungsteil 3 der Stromquelle 2, dem Schweißbrenner 7, insbesondere der Elektrode bzw. dem Schweißdraht 9, zugeführt. Das zu verschweißende Werkstück 14 ist über eine weitere Schweißleitung für das weitere Potential, insbesondere das Masse-Kabel, mit der Stromquelle 2 verbunden, sodass über den Lichtbogen 13 ein Stromkreis aufgebaut werden kann.

Zum Kühlen des Schweißbrenners 7 kann dieser über ein Kühlgerät 15 unter Zwischenschaltung evtl. Komponenten, wie beispielsweise einem Strömungswächter, mit einem Flüssigkeitsbehälter, insbesondere einem Wasserbehälter 16 mit einer Füllstandsanzeige 17, verbunden werden. Die einzelnen Komponenten der Schweißanlage, also die Stromquelle 2, das Drahtvorschubgerät 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Das Schweißgerät 1, insbesondere die Stromquelle 2, weist weiters eine Ein- und/oder Ausgabevorrichtung 18 auf, über die die unterschiedlichsten Schweißparameter, Betriebsarten oder Schweißprogramme des Schweißgerätes 1 eingestellt bzw. aufgerufen und angezeigt werden können. Dabei werden die über die Ein- und/oder Ausgabevorrichtung 18 eingestellten Schweißparameter, Betriebsarten oder Schweißprogramme an die Steuervorrichtung 4 weitergeleitet und von dieser werden anschließend die einzelnen Komponenten des Schweißgerätes 1 angesteuert bzw. entsprechende Sollwerte für die Regelung oder Steuerung vorgegeben. Hierbei ist es auch möglich, dass bei Verwendung eines entsprechenden Schweißbrenners 7 auch Einstellvorgänge über den Schweißbrenner 7 vorgenommen werden können, wobei dazu der Schweißbrenner 7 mit einer Schweißbrenner-Ein- und/oder Ausgabevorrichtung 19 ausgestattet ist. Bevorzugt ist dabei der Schweißbrenner 7 über einen Datenbus, insbesondere einen seriellen Datenbus, mit dem Schweißgerät 1, insbesondere der Stromquelle 2 oder dem Drahtvorschubgerät 8 verbunden. Zum Starten des Schweißprozesses weist der Schweißbrenner 7 meist einen Startschalter (nicht dargestellt) auf, sodass durch Betätigen des Startschalters der Lichtbogen 13 gezündet werden kann. Um gegen die große Hitzeeinstrahlung vom Lichtbogen 13 geschützt zu werden, ist es möglich, dass der Schweißbrenner 7 mit einem Hitzeschutzschild 20 ausgestattet wird.

Weiters ist in dem dargestellten Ausführungsbeispiel der Schweißbrenner 7 über ein Schlauchpaket 21 mit dem Schweißgerät 1 verbunden, wobei das Schlauchpaket 21 über einem Knickschutz 22 am Schweißbrenner 7 befestigt ist. In dem Schlauchpaket 21 sind die einzelnen Leitungen, wie beispielsweise die Versorgungsleitung bzw. Leitungen für den Schweißdraht 9, für das Gas 5, für den Kühlkreislauf, für die Datenübertragung, usw., vom Schweißgerät 1 zum Schweißbrenner 7 angeordnet, wogegen das Masse-Kabel bevorzugt extra an der Stromquelle 2 angeschlossen wird.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 7 als luftgekühlter Schweißbrenner 7 ausgeführt werden kann, sodass beispielsweise das Kühlgerät 15 entfallen kann. Man kann also sagen, dass das Schweißgerät 1 zumindest durch die Stromquelle 2, das Drahtvorschubgerät 8 und das Kühlgerät 15 gebildet wird, wobei diese auch in einem gemeinsamen Gehäuse 11 angeordnet sein kann. Weiters ist es möglich, dass noch weitere Teile bzw. Komponenten, wie beispielsweise ein Schleifschutz 23 am Drahtvorschubgerät 8 oder ein Optionsträger 24 an einer Haltevorrichtung 25 für den Gasspeicher 6, usw. angeordnet bzw. eingesetzt werden können.

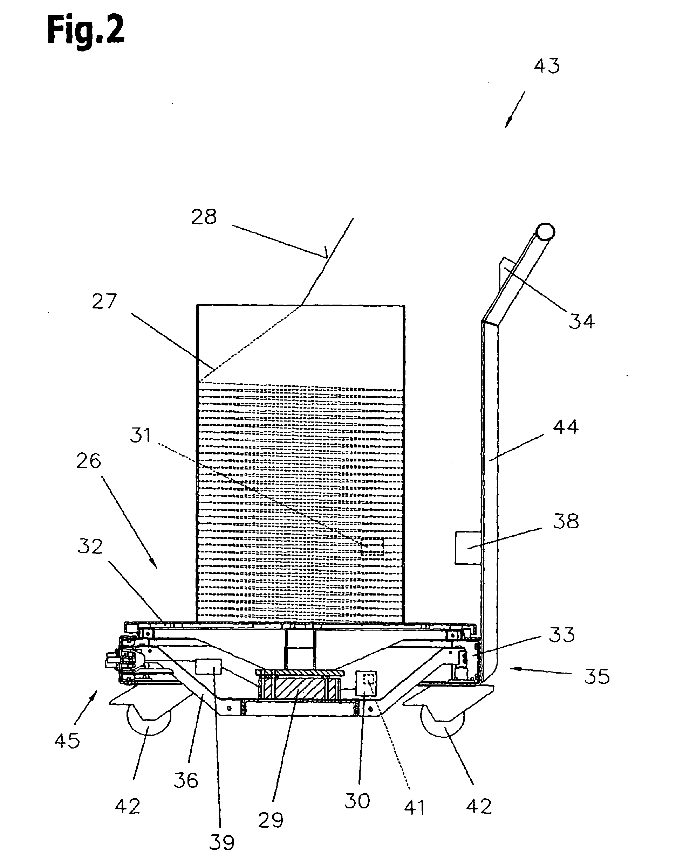

Die Fig. 2 bis 4 zeigen je eine teilweise geschnittene Ausführungsform einer Vorrichtung 26 zur Erfassung des Gewichts eines in einer Vorratseinheit 27 befindlichen Drahtvorrats 28. Die Vorratseinheit 27 ist im dargestellten Beispiel durch ein Drahtfass gebildet. Die Vorrichtung 26 enthält eine Messeinrichtung 29 zur Messung des Gewichts der Vorratseinheit 27 samt Drahtvorrat 28. Die Messeinrichtung 29 kann beispielsweise durch eine Messbrücke mit Dehnungsmessstreifen gebildet sein. Die Messeinrichtung 29 ist mit einer Auswertungseinrichtung 30 zur Auswertung der Messwerte und allenfalls einer Anzeige 34 zur Anzeige der Messwerte verbunden. Die Auswertungseinrichtung 30 sowie die Anzeige 34 müssen nicht unbedingt an der Vorrichtung 26 angeordnet sein, sondern können auch an einer anderen Stelle, beispielsweise am Schweißgerät 1 selbst, angeordnet sein. Dabei werden die entsprechenden Messdaten drahtlos oder leitungsgebunden zur Auswertungseinrichtung 30 und Anzeige 34 übermittelt.

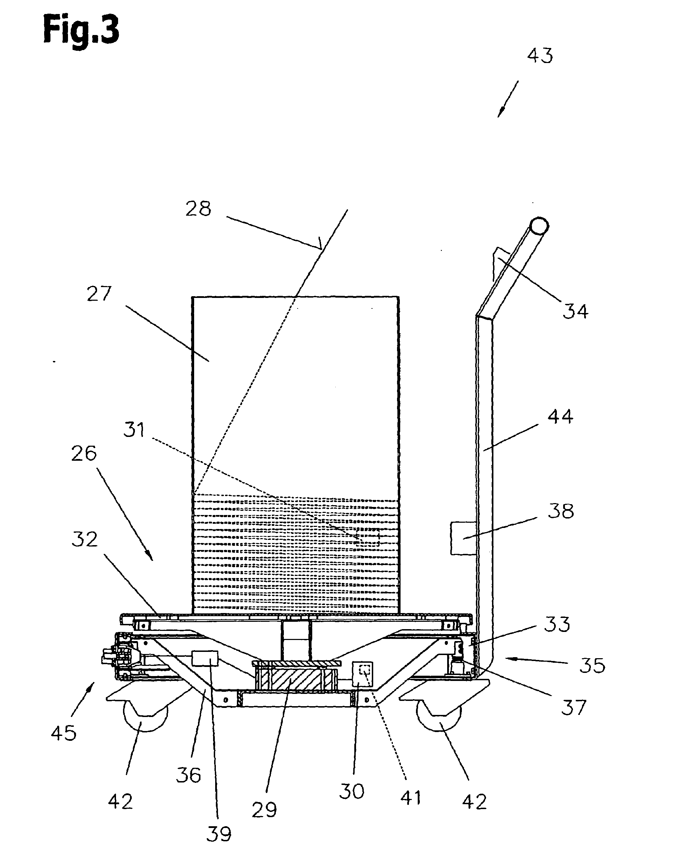

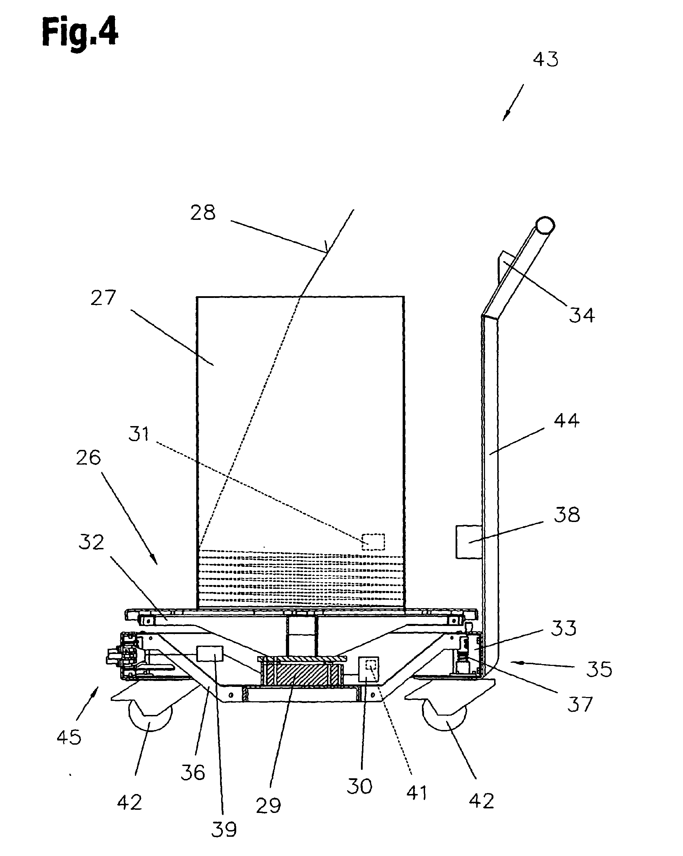

Erfindungsgemäß ist die Messeinrichtung 29 zur Messung des Gewichts g der Vorratseinheit 27 mit dem Drahtvorrat 28 unterhalb eines Schwellwerts gₛ des Gewichts g der Vorratseinheit 27 samt Drahtvorrat 28 ausgebildet und zur Anzeige des maximalen Messwerts bei Überschreitung des Gewichts g der Vorratseinheit 27 samt Drahtvorrat 28 über den Schwellwert gₛ ausgebildet. Dadurch wird erreicht, dass die Gewichtsmessung erst bei einem Teilgewicht des Drahtvorrats 28 begonnen wird und somit mit einer höheren Genauigkeit ausgeführt werden kann. Beispielsweise kann bei einer Vorratseinheit 27 samt Drahtvorrat 28 mit einem Gesamtgewicht von 250kg die Messung erst bei 100kg oder darunter begonnen werden. Hierzu ist in Fig. 2 ein voll gefüllter Drahtvorrat 28 mit einem Gewicht von 250kg dargestellt, wogegen in Fig. 3 ein bereits teilweise entleerter Drahtvorrat 28 mit einem geringeren Gewicht als 100kg gezeigt ist. Wie im Vergleich ersichtlich, liegt in Fig. 2 aufgrund des hohen Gewichts die Messplattform 32 am Rahmen 33 auf, wogegen in Fig. 3 das Gewicht geringer und die Messplattform 32 vom Rahmen 33 abgehoben und somit im Wesentlichen die Gewichtsmessung möglich ist. Wichtig ist also die Messung des Gewichts unterhalb des Schwellwerts gₛ, sodass aus der daraus berechneten Drahtlänge das Ende des Drahtvorrats 28 bekannt ist, wobei die Messung erfindungsgemäß mit relativ hoher Genauigkeit - beispielsweise in 100 Gramm Schritten - vorgenommen wird. Entsprechend kann die Messung solange durchgeführt werden, bis die Messplattform gemäß Fig. 4 vollständig angehoben ist. Erfindungsgemäß dient die Messung allerdings zur Festlegung des Wechselzeitpunkts der Vorratseinheit 27. Dabei sollte der Wechselzeitpunkt so gewählt werden, wenn mit dem vorhandenen Drahtvorrat 28'die folgende Schweißnaht nicht mehr geschweißt werden kann. Es muss also zumindest die augenblicklich geschweißte Schweißnaht noch vollendet werden können. Entsprechend wird aus dem gemessenen Gewicht die Länge berechnet und mit der für die Schweißnaht erforderlichen Länge verglichen. Dieser Vergleich wird im Wesentlichen periodisch oder permanent durchgeführt, wodurch der Wechselzeitpunkt frühzeitig bekannt ist. Selbstverständlich kann der Wechselzeitpunkt mit einem Schwellwert bzw. eines Restwerts g_{Rest} des Gewichts vorgegeben sein und/oder vom Anwender eingestellt, verändert, optimiert, usw. werden.

Bei der dargestellten Ausführungsform ist die Vorratseinheit 27 mit dem Drahtvorrat 28 auf einer beweglichen Messplattform 32 angeordnet. Zwischen der Messplattform 32 und einem festen Rahmen 33 ist eine untere Plattform 36, auf der die Messeinrichtung 29 platziert ist, angeordnet, wobei die untere Plattform 36 ebenfalls beweglich ist und sich im Wesentlichen wie die Messplattform 32 bewegt. Es ist also die Messeinrichtung 29 zwischen der unteren Plattform 36 und der Messplattform 32 angeordnet. Demnach ist die Messplattform 32 auf der Messeinrichtung 29 montiert. An den Ecken innerhalb des im Wesentlichen quadratischen Rahmens 33 sind vier Federelemente 37 angeordnet, welche eine Gegenkraft F_{gegen} auf das Gewicht g der Messplattform 32 samt Vorratseinheit 27 und Drahtvorrat 28 aufbringen. Zur Aufnahme der Messeinrichtung 29 weist die untere Plattform 36 eine Vertiefung auf. Dadurch bilden die Eckpunkte der Plattform 36 eine Ebene, welche an den Federelementen 37 aufliegen, und die Vertiefung weist eine weitere Ebene auf, auf welcher die Messeinrichtung 29 befestigt ist. Die Ebenen sind dabei beispielsweise durch schräge Wände miteinander verbunden, wobei zumindest zwei gegenüberliegende Wände erforderlich sind. Somit ist die Messeinrichtung 29 in einem Zwischenraum dieser beiden Ebenen der unteren Plattform 36 angeordnet. Grundsätzlich ist des Weiteren die Größe und Form der unteren Plattform 36 an die inneren Abmessungen des Rahmens 33 angepasst. Im Gegensatz dazu ist die Messplattform 32 an die Größe und Form der äußeren Abmessungen des Rahmens 33 angepasst, wodurch diese am Rahmen 33 aufliegen kann, wie in Fig. 2 dargestellt. Demnach ist die Messplattform 32 im Wesentlichen eine Platte, wobei zur Befestigung an der Messeinrichtung 29 an der Unterseite der Messplattform 32 eine Erhöhung angeordnet ist. Die Größe und Form dieser Erhöhung ist entsprechend an die Größe der Messeinrichtung 29 angepasst und gleicht den Höhenunterschied aus. Bei einem derartigen Aufbau werden exzentrische Belastungen kompensiert/ausgeglichen. Das heißt, dass die Vorratseinheit 27 zwar vollständig auf der Messplattform 32 stehen muss, jedoch der Schwerpunkt nicht zwingend im Zentrum der Messplattform 32 sein muss. Erreicht wird dies durch eine entsprechende Anordnung von Dehnungsmessstreifen (DMS) in der Messeinrichtung 29.

Ist das Gewicht g der Messplattform 32 samt Vorratseinheit 27 und Drahtvorrat 28 größer als die Gegenkraft F_{gegen} der Federelemente 37 - also über dem Schwellwert gₛ, so liegt die nach unten gedrückte Messplattform 32 auf dem Rahmen 33 bzw. daran angeordneten elastischen Elementen auf (Fig. 2) und die Messeinrichtung 29 ist im Wesentlichen deaktiviert. Dementsprechend sind die Federelemente 37 durch die ebenfalls nach unten gedrückte untere Plattform 36 gestaucht. Somit wird die untere Plattform 36 mit dem Maximaldruck der Federelemente 37 gegen die Messplattform 32 gedrückt. Dadurch wird von der Messeinrichtung 29 stets der Höchstwert gemessen, wodurch die Messeinrichtung im Wesentlichen deaktiviert ist. In diesem Zustand bleibt die Vorrichtung 26, bis die Federelemente 37 die untere Plattform 36 und somit die Messplattform 32 anheben können also das Gewicht g der Vorratseinheit 27 unter den Schwellwert gₛ sinkt (siehe Fig. 3).

Sobald das Gewicht g der Messplattform 32, der Vorratseinheit 27 und des Drahtvorrats 28 geringer ist, als die Gegenkraft F_{gegen} der Federelemente 37 - also unter dem Schwellwert gₛ - wird die Messplattform 32 über die untere Plattform 36 angehoben und das Gewicht g der Messplattform 32 samt Vorratseinheit 27 und Drahtvorrat 28 wirkt auf die Messeinrichtung 29, welche dadurch aktiviert wird. Das heißt, dass ab diesem Zeitpunkt die Messung mit der bereits beschriebenen Genauigkeit aktiv ist und vorgenommen wird. Dementsprechend wird der Druck der Federelemente 37 auf die untere Plattform 36 proportional mit sinkendem Gewicht g reduziert. Somit reduziert sich auch der gemessene Wert der Messeinrichtung 29, da der Druck auf die Messeinrichtung 29 sinkt.
Es wird also die Messeinrichtung 29 gegen die Messplattform 32 gedrückt, sodass die Dehnungsmessstreifen (DMS) in Abhängigkeit des Gewichts g unterschiedlich belastet werden.

Um aus dem Gewicht g auf die Länge des verbleibenden Drahtvorrats 28 rückrechnen zu können, ist es erforderlich, Kenndaten wie z.B. das Leergewicht der Vorratseinheit 27, das Material und den Durchmesser des Drahts usw. zu wissen. Diese Daten können anhand eines an der Vorratseinheit 27 befindlichen Identifikationselements 31 identifiziert werden. Dieses Identifikationselement 31 kann beispielsweise durch einen Barcode oder einen RFID-Transponder gebildet sein oder durch einen einfachen Aufkleber, sodass der Benutzer die Daten ablesen und eingeben/einstellen kann. Wenn eine entsprechende Einrichtung 38 zur Erkennung des Identifikationselements 31 vorgesehen ist, können diese Kenndaten automatisch über eine drahtgebundene oder drahtlose Verbindung an die Auswerteeinrichtung 30 übermittelt werden. Die Auswerteeinheit 30 kann dabei im Bereich der Messeinrichtung 29 und/oder extern wie beispielsweise im Schweißgerät 1 angeordnet sein. Über eine Schnittstelle 39 können die Messwerte des Gewichts g an die externe Auswerteeinrichtung 30 oder ein Datennetz (nicht dargestellt) übermittelt werden. Die Schnittstelle 39 kann auch durch eine Steckverbindung 40 zur drahtgebundenen Übertragung der Messwerte des Gewichts g zur Auswerteeinrichtung 30 oder ein Datennetz oder das Schweißgerät 1 ausgebildet sein. Über einen Speicher 41, der mit der Messeinrichtung 29 und/oder der Auswerteeinrichtung 30 verbunden oder integriert ist, können Messdaten gespeichert werden.

Für eine leichtere Handhabung der Vorrichtung 26 können am festen Rahmen 33 Räder 42 oder dergl. angeordnet sein, sodass ein Fahrwagen 43 gebildet wird. Über einen mit dem Rahmen 33 verbundenen Griff 44 kann der Fahrwagen 43 händisch bedient und verschoben werden.

Die erfindungsgemäße Konstruktion der Erfassungsvorrichtung 26 macht es nicht erforderlich, dass die Vorratseinheit 27 mit dem Drahtvorrat 28 genau in der Mitte der Messplattform 32 angeordnet werden muss. Durch die Verwendung von zumindest zwei Dehnungsmessstreifen (DMS) in der Messeinrichtung 29 können auch außermittig angeordnete Vorratseinheiten 27 mit besonders hoher Genauigkeit erfasst werden. Somit werden die Messwerte der DMS von der Messeinrichtung 29 ausgewertet, wobei beispielsweise eine Kompensation und/oder eine Mitteilung der Messwerte erfolgt. Entsprechend wird das Ergebnis dieser Auswertung an die Auswerteeinheit 30 übermittelt.

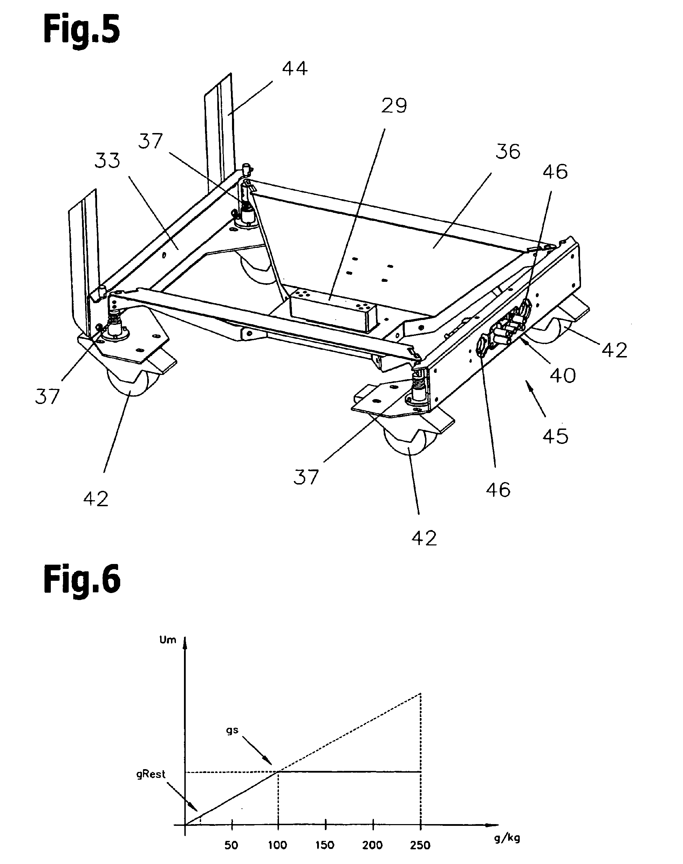

Fig. 5 zeigt eine weitere teilweise geschnittene Darstellung des Fahrwagens 43 gemäß den Fig. 2 bis 4, wobei ein am Rahmen 33 angeordnetes Andockelement 45 sichtbar ist, das mit der Steckverbindung 40 gekoppelt ist, über die zumindest die Messwerte der Messeinrichtung 29 zum Schweißgerät 1 übertragen werden können. Im Fall, dass der Fahrwagen 43 einen Griff 44 aufweist, ist bevorzugt das Andockelement 45 auf der dem Griff 44 gegenüberliegenden Seite des Rahmens 33 anzuordnen. Des Weiteren sind links/rechts und/oder oberhalb/unterhalb des Andockelements 45 Führungen 46 im Rahmen 33 integriert. Diese Führungen 46 dienen entsprechend der Zentrierung des Fahrwagens 43, sodass das Andockelement 45 geführt mit dem entsprechenden Gegenstück verbunden und kontaktiert wird. Dazu kann die Steckverbindung 40 mit den Führungen 46 beispielsweise über Druckfedern schwingend gelagert sein, sodass auch bei Unebenheiten und/oder verschmutzen Rädern 42 die Führung und ein sicherer Kontakt gewährleistet ist. Selbstverständlich kann der Fahrwagen 43 vorab auch am Rahmen 33 geführt werden, sodass die Führungen 46 bereits ausgerichtet werden. Weiters ist es möglich, dass bei einer korrekten Positionierung des Fahrwagens 43 dies beispielsweise mit einer LED an der Seite des Griffs 44 angezeigt und somit dies dem Benutzer optisch angezeigt wird. Dementsprechend wird dem Benutzer auch angezeigt, dass die Spannungsversorgung für die Komponenten des Fasswagens 43 wie Messeinrichtung 29, Auswerteeinrichtung 30, usw. gegeben ist.

Bevorzugt ist der Fahrwagen 43 zur Aufnahme in einer automatischen Drahtwechsel-Vorrichtung, wie sie in der AT 10 622 U1 beschrieben ist, ausgebildet. Der Zusatzwerkstoff wird über eine Vorschubeinheit von der Vorratseinheit 27 über einen Förderschlauch bzw. ein Schlauchpaket zu einem Schweiß- oder Lötprozess gefördert. Die Fördervorrichtung ist zum automatischen Wechsel des Zusatzwerkstoffs ausgebildet, indem die Vorschubeinheit der Fördervorrichtung zwischen zwei Vorratseinheiten 27 mit zugehörigen Vorratsstationen bewegbar ist.

Bei einem Wechsel des Zusatzwerkstoffs wird der Zusatzwerkstoff der ersten Vorratseinheit 27 zurückgefördert und eine automatische Relativbewegung der Vorschubeinheit zur weiteren Vorratseinheit 27 durchgeführt und der Zusatzwerkstoff aus dieser Vorratseinheit 27 zum Schweißprozess gefördert.

Der Fahrwagen 43 mit der Vorratseinheit 27 wird dabei in der Vorrichtung gemäß AT 10 622 U1, insbesondere stirnseitig, positioniert, wobei hierzu eine automatische Koppelung mit der Vorrichtung zum Drahtwechsel erfolgt, sodass die Daten für die Gewichtsmessung und evtl. noch zusätzlich über den Fahrwagen 43 eingebbare Daten beispielsweise an das Schweißgerät 1 und/oder einem Roboter übertragen werden können. Das heißt, dass bei einer derartigen Vorrichtung zwei Fahrwagen 43 angeordnet sind, wobei jener Fahrwagen 43 mit einer im Wesentlichen leeren Vorratseinheit 27 nunmehr in einfacher Form vom Benutzer durch Herausziehen aus der Vorrichtung entkoppelt und dieser mit einer neuen Vorratseinheit 27 bestückt wird, wobei die Versorgung des Schweißprozesses von der Vorratseinheit 27 des zweiten Fahrwagens 43 erfolgt. Üblicherweise sind die einzelnen Komponenten, wie die Vorrichtung zum Drahtwechseln, der Fahrwagen 43 und das Schweißgerät 1 untereinander vernetzt, sodass über einen Datenbus oder drahtlos die Daten ausgetauscht werden können. Dabei ist es möglich, dass das Management für den Drahtwechsel und die Gewichtsmessung unabhängig von der Schweißprozessregelung erfolgt, d.h., dass beispielsweise an der Vorrichtung zum Drahtwechsel die Auswerteinheit 30 angeordnet ist, die mit dem Schweißgerät 1 kommuniziert. Selbstverständlich ist es auch möglich, dass von der Steuervorrichtung des Schweißgeräts 1 die vollständige Überwachung und Abwicklung durchgeführt wird.

Da der Fasswagen 43 allerdings im Wesentlichen modular ausgebildet ist, kann dieser in verschiedensten Systemen Anwendung finden. So kann das System beispielsweise auch dafür eingesetzt werden, den Benutzer rechtzeitig über das Drahtende eines Fasses ganz ohne automatisches Drahtwechseln zu informieren. Denkbar ist auch eine frühe Auswertung beispielsweise bei Bekanntgabe der Gesamtfüllmenge über die Restmenge in Prozent. Ebenso können bei Datenspeicherung verschiedene Rückschlüsse und Statistiken auf das Schweißsystem gezogen werden, wie Materialverbrauch über Zeit, Stehzeiten der Anlage, usw..

Schließlich zeigt Fig. 6 ein Beispiel eines Messverlaufs in Form eines Diagramms des Messsignals der Messeinrichtung 26 in Abhängigkeit des Gewichts g der Vorratseinheit 27 mit dem Drahtvorrat 28. Der volle Drahtvorrat hat beispielsweise ein Gewicht von 250kg, wohingegen die Messung erst bei dem Schwellwert gₛ von 100kg einsetzt. Bei einem Gewicht g oberhalb dem Schwellwert gₛ wird im Wesentlichen keine Messung durchgeführt und lediglich die Aussage getroffen, dass das Gewicht g größer als der Schwellwert gₛ ist. In diesem Zustand wird die Messeinrichtung 29 als deaktiviert bezeichnet. Unterhalb des Schwellwerts gₛ erfolgt eine entsprechende Messung des Gewichts g der Vorratseinheit 27 mit dem Drahtvorrat 28 mit Hilfe der aktivierten Messeinrichtung 29. Bei Unterschreitung eines vorgegebenen Restwerts g_{Rest} des Gewichts erfolgt eine entsprechende Anzeige, sodass der Wechsel des Drahtvorrats 28 rechtzeitig eingeleitet oder vorgenommen werden kann.

Bevorzugt ist das Schweißgerät 1 derart ausgebildet, dass vom Benutzer ein Menüpunkt zur Eingabe der Daten für den Drahtvorrat 28 aufrufbar ist und diese somit im Schweißgerät 1 gespeichert werden. Hierzu ist es möglich, dass beim Aufruf des Menüpunkts Drahtvorrat am Schweißgerät 1 der Benutzer vom Schweißgerät 1 aufgefordert wird, die entsprechenden Kenndaten der Vorratseinheit 27 und des Drahtvorrats 28, beispielsweise das Leergewicht der Vorratseinheit 27, die Länge des Drahtvorrats 28, das Material und der Durchmesser des Drahts, oder dergl. einzugeben. Diese eingegeben Daten können vom Schweißgerät 1 an die Auswerteeinheit 30 übermittelt werden oder es ist auch möglich, dass die Auswertung direkt vom Schweißgerät 1 selbst erfolgt, d.h., dass die Gewichtsmessung des Drahtvorrats 28 über die Schnittstelle 39 mit dem Schweißgerät 1 verbunden ist, sodass nach Abfrage des aktuellen Gewichts das Schweißgerät 1 die Berechnung für die vorhandene Drahtlänge durchführt, da die Grunddaten direkt im Schweißgerät 1 eingegeben bzw. gespeichert sind und somit die noch vorhandene Menge in der Vorratseinheit 27 errechnet werden kann. Gleichzeitig kann damit der Abgleich durchgeführt werden, ob mit der vorhandenen Vorratsmenge noch ein vollständiger Schweißprozess ohne Qualitätseinbußen durchgeführt werden kann oder nicht. Es ist auch möglich, dass im Schweißgerät 1 Tabellen für die unterschiedlichsten Drahtvorräte 28 gespeichert sind, die der Benutzer durch einfaches Anwählen aktivieren kann. Auch ist es möglich, dass ein Online-Zugriff zum Hersteller eines Drahtvorrates 28 aufgebaut werden kann und die Daten online, insbesondere über das Internet, für den entsprechend eingesetzten Drahtvorrat 28 herunter geladen werden können.

## Patentansprüche

1. Fahrwagen (43) zur Anordnung einer Vorratseinheit (27) mit einem Drahtvorrat (28), mit daran angeordneten Rädern (42), mit einer Einrichtung (29) zur Messung des Gewichts (g) der Vorratseinheit (27) samt Drahtvorrat (28), einer mit der Messeinrichtung (29) verbundenen Einrichtung (30) zur Auswertung der Messwerte und einer Anzeige (34) zur Anzeige der Unterschreitung eines vorgegebenen Restwerts (g_{Rest}) des Gewichts (g) des Drahtvorrats (28), **dadurch gekennzeichnet, dass** eine bewegliche Messplattform (32) zur Anordnung der Vorratseinheit (27) samt Drahtvorrat (28) vorgesehen ist und die Messeinrichtung (29) zwischen der Messplattform (32) und einer unteren Plattform (36) angeordnet und zur Messung des Gewichts (g) der Vorratseinheit (27) mit dem Drahtvorrat (28) unterhalb eines Schwellwerts (gₛ) des Gewichts (g) der Vorratseinheit (27) samt Drahtvorrat (28) und zur Anzeige des maximalen Messwerts bei Überschreitung des Gewichts (g) der Vorratseinheit (27) samt Drahtvorrat (28) über den Schwellwert (gₛ) ausgebildet ist.

2. Fahrwagen (43) nach Anspruch 1, **dadurch gekennzeichnet, dass** eine Einrichtung (35) zur Aufbringung einer dem Schwellwert (gₛ) entsprechenden Gegenkraft (F_{gegen}) auf das Gewicht (g) der Messplattform (32) samt Vorratseinheit (27) mit dem Drahtvorrat (28) vorgesehen ist, und die Messeinrichtung (29) zur Messung des Gewichts (g) der Messplattform (32) samt Vorratseinheit (27) mit dem Drahtvorrat (28) unterhalb dieser Gegenkraft (F_{gegen}) ausgebildet ist, und bei Überschreitung des Gewichts (g) der Messplattform (32) mit Vorratseinheit (27) samt Drahtvorrat (28) die Messplattform (32) am Rahmen (33) aufliegt.

3. Fahrwagen (43) nach Anspruch 2, **dadurch gekennzeichnet, dass** die Einrichtung (35) zur Aufbringung einer Gegenkraft (F_{gegen}) durch zumindest ein vorzugsweise zwischen dem Rahmen (33) und der unteren Plattform (36) mit der Messeinrichtung (29) angeordnetes Federelement (37) gebildet ist.

4. Fahrwagen (43) nach einem der Ansprüche 1 bis 3, **dadurch gekennzeichnet, dass** die Messeinrichtung (29) Dehnungsmessstreifen enthält.

5. Fahrwagen (43) nach einem der Ansprüche 1 bis 4, **dadurch gekennzeichnet, dass** eine Einrichtung (38) zur Erkennung eines an der Vorratseinheit (27) befindlichen Identifikationselements (30) vorgesehen ist, welche Erkennungseinheit (38) mit der Messeinrichtung (29) oder der Auswertungseinrichtung (30) verbunden ist.

6. Fahrwagen (43) nach einem der Ansprüche 1 bis 5, **dadurch gekennzeichnet, dass** die Messeinrichtung (29) mit einer Schnittstelle (39) zur Übertragung der Messwerte des Gewichts (g) an die Auswertungseinrichtung (30) oder ein Datennetz verbunden ist.

7. Fahrwagen (43) nach Anspruch 6, **dadurch gekennzeichnet, dass** die Schnittstelle (29) durch eine Steckverbindung (40) zur drahtgebundenen Übertragung der Messwerte des Gewichts (g) zur Auswerteeinrichtung (30) oder das Datennetz ausgebildet ist.

8. Fahrwagen (43) nach einem der Ansprüche 1 bis 7, **dadurch gekennzeichnet, dass** die Auswerteeinrichtung (30) zur Berechnung der Länge (l) des Drahtvorrats (28) aufgrund des gemessenen Gewichts (g) und gespeicherter Kenndaten ausgebildet ist.

9. Fahrwagen (43) nach einem der Ansprüche 1 bis 8, **dadurch gekennzeichnet, dass** ein Speicher (41) zur Speicherung der Messwerte vorgesehen ist.

10. Fahrwagen (43) nach einem der Ansprüche 1 bis 9, **dadurch gekennzeichnet, dass** zumindest ein Andockelement (45) zum Andocken an ein entsprechendes Gegenstück vorgesehen ist.

11. Verfahren zur Erfassung des Gewichts eines in einer Vorratseinheit (27) befindlichen Drahtvorrats (28), welche Vorratseinheit (27) mit dem Drahtvorrat (28) auf einer beweglichen Messplattform (32) eines Fahrwagens (43) nach einem der Ansprüche 1 bis 10 angeordnet wird, **dadurch gekennzeichnet, dass** das Gewicht (g) der Vorratseinheit (27) samt Drahtvorrat (28) mit einer zwischen der beweglichen Messplattform (32) und einer unteren Plattform (36) angeordneten Messeinrichtung (29) gemessen und einer Auswerteeinrichtung (30) zugeführt wird, wobei die Messung des Gewichts (g) der Vorratseinheit (27) samt Drahtvorrat (28) unterhalb eines Schwellwerts (gₛ) des Gewichts (g) vorgenommen wird, während bei Überschreitung des Schwellwerts (gₛ) des Gewichts (g) der maximale Messwert angezeigt wird, und die Unterschreitung eines vorgegebenen Restwerts (g_{Rest}) des Gewichts (g) des Drahtvorrats (28) angezeigt wird.

12. Verfahren nach Anspruch 11, **dadurch gekennzeichnet, dass** der Schwellwert (gₛ) des Gewichts durch Aufbringen einer Gegenkraft (F_{gegen}) auf die Vorratseinheit (27) samt Drahtvorrat (28) eingestellt wird, und die Messung des Gewichts (g) der Vorratseinheit (27) samt Drahtvorrat (28) erst bei Unterschreitung des Gewichts der Vorratseinheit (27) samt Drahtvorrat (28) unterhalb des Schwellwerts (gₛ) vorgenommen wird, wobei die Vorratseinheit (27) durch die Gegenkraft (F_{gegen}) angehoben wird.

13. Verfahren nach Anspruch 11 oder 12, **dadurch gekennzeichnet, dass** Kenndaten der Vorratseinheit (27) und des Drahtvorrats (28), beispielsweise das Leergewicht der Vorratseinheit (27), die Länge des Drahtvorrats (28), das Material und der Durchmesser des Drahts, oder dergl. eingegeben, berechnet und/oder ausgewählt und der Auswerteeinrichtung (30) zugeführt werden.

14. Verfahren nach Anspruch 11 oder 12, **dadurch gekennzeichnet, dass** Kenndaten der Vorratseinheit (27) und des Drahtvorrats (28) automatisch erfasst und der Auswerteeinrichtung (30) zugeführt werden.

15. Verfahren nach Anspruch 14, **dadurch gekennzeichnet, dass** die Kenndaten der Vorratseinheit (27) und des Drahtvorrats (28) durch ein an der Vorratseinheit (27) angeordnetes Identifikationselement (31) automatisch erfasst und der Auswerteeinrichtung zugeführt werden.

16. Verfahren nach einem der Ansprüche 13 bis 15, **dadurch gekennzeichnet, dass** aus dem erfassten Gewicht (g) der Vorratseinheit (27) samt Drahtvorrat (28) unter Berücksichtigung der Kenndaten der Vorratseinheit (27) und des Drahtvorrats (28) die aktuelle Länge des Drahtvorrats (28) berechnet wird.

17. Verfahren nach einem der Ansprüche 11 bis 16, **dadurch gekennzeichnet, dass** bei Unterschreitung des vorgegebenen Restwerts (g_{Rest}) des Gewichts des Drahtvorrats (28) ein automatischer Wechsel der Vorratseinheit (27) vorgenommen oder eingeleitet wird.

## Claims

1. A carriage (43) for arranging a supply unit (27) including a wire supply (28), comprising wheels (42) disposed thereon, a device (29) for measuring the weight (g) of the supply unit (27) including the wire supply (28), a device (30) connected with the measuring device (29) for evaluating the measurement values, and a display (34) for displaying the falling below a predetermined residual value (g_{Rest}) of the weight (g) of the wire supply (28), **characterized in that** a moveable measurement platform (32) is provided for arranging the supply unit (27) including the wire supply (28), and that the measuring device (29) is arranged between the measurement platform (32) and a lower platform (36) and is designed for measuring the weight (g) of the supply unit (27) including the wire supply (28) below a threshold value (gₛ) of the weight (g) of the supply unit (27) including the wire supply (28) and for displaying the maximum measurement value when the weight (g) of the supply unit (27) including the wire supply (28) exceeds the threshold value (gₛ).

2. The carriage (43) according to claim 1, **characterized in that** a device (35) for applying a counter-force (F_{gegen}) corresponding to the threshold value (gₛ) on the weight (g) of the measurement platform (32) along with the supply unit (27) including the wire supply (28) is provided, and that the measuring device (29) is designed for measuring the weight (g) of the measurement platform (32) along with the supply unit (27) including the wire supply (28) below said counter-force (F_{gegen}), and that the measurement platform (32) rests on the frame (33) when the weight (g) of the measurement platform (32) along with the supply unit (27) including the wire supply (28) is exceeded.

3. The carriage (43) according to claim 2, **characterized in that** the device (35) for applying a counter-force (F_{gegen}) is formed by at least one spring element (37) disposed with the measuring device (29) preferably between the frame (33) and the lower platform (36)

4. The carriage (43) according to any of claims 1 to 3, **characterized in that** the measuring device (29) comprises strain gauges.

5. The carriage (43) according to any of claims 1 to 4, **characterized in that** a device (38) is provided for detecting an identification element (30) provided at the supply unit (27), said detecting device (38) being connected with the measuring device (29) or the evaluating device (30).

6. The carriage (43) according to any of claims 1 to 5, **characterized in that** the measuring device (29) is connected with an interface (39) for transmitting the measurement values of the weight (g) to the evaluating device (30) or to a data network.

7. The carriage (43) according to claim 6, **characterized in that** the interface (29) is formed by a plug connection (40) for the wire-bound transmission of the measurement values of the weight (g) to the evaluating device (30) or the data network.

8. The carriage (43) according to any of claims 1 to 7, **characterized in that** the evaluating device (30) is designed for calculating the length (1) of the wire supply (28) on the basis of the measured weight (g) and stored characteristic data.

9. The carriage (43) according to any of claims 1 to 8, **characterized in that** a memory (41) is provided for storing the measurement values.

10. The carriage (43) according to any of claims 1 to 9, **characterized in that** at least one docking element (45) for docking to a corresponding counterpart is provided.

11. A method for detecting the weight of a wire supply (28) positioned in a supply unit (27), said supply unit (27) being disposed with the wire supply (28) on a moveable measurement platform (32) of a carriage (43) according to any of claims 1 to 10, **characterized in that** the weight (g) of the supply unit (27) including the wire supply (28) is measured with a measuring device (29) disposed between the moveable measurement platform (32) and a lower platform (36) and is supplied to an evaluating device (30), wherein the measurement of the weight (g) of the supply unit (27) including the wire supply (28) is performed below a threshold value (gₛ) of the weight (g) while the maximum measurement value is displayed when the threshold value (gₛ) of the weight (g) is exceeded, and the falling below a predetermined residual value (g_{Rest}) of the weight (g) of the wire supply (28) is displayed.

12. The method according to claim 11, **characterized in that** the threshold value (gₛ) of the weight is set by applying a counter-force (F_{gegen}) on the supply unit (27) including the wire supply (28), and that the measurement of the weight (g) of the supply unit (27) including the wire supply (28) is only performed when the weight of the supply unit (27) including the wire supply (28) has fallen below the threshold value (gₛ), wherein the supply unit (72) is lifted by the counter-force (F_{gegen}).

13. The method according to claims 11 or 12, **characterized in that** characteristic data of the supply unit (27) and of the wire supply (28), for instance, the empty weight of the supply unit (27), the length of the wire supply (28), the material and the diameter of the wire, or the like, are input, calculated and/or selected and supplied to the evaluating device (30).

14. The method according to claims 11 or 12, **characterized in that** characteristic data of the supply unit (27) and of the wire supply (28) are detected automatically and supplied to the evaluating device (30).

15. The method according to claim 14, **characterized in that** the characteristic data of the supply unit (27) and of the wire supply (28) are automatically detected by an identification element (31) arranged at the supply unit (27) and supplied to the evaluating device.

16. The method according to any of claims 13 to 15, **characterized in that** the current length of the wire supply (28) is calculated from the detected weight (g) of the supply unit (27) including the wire supply (28), taking into account the characteristic data of the supply unit (27) and of the wire supply (28).

17. The method according to any of claims 11 to 16, **characterized in that** an automatic exchange of the supply unit (27) is performed or initiated when the predetermined residual value (g_{Rest}) of the weight of the wire supply (28) is fallen below.

## Revendications

1. Chariot (43) pour l'agencement d'une unité de réserve (27) d'une réserve de fil (28), présentant des roues (42), un dispositif (29) pour la mesure du poids (g) de l'unité de réserve (27) avec la réserve de fil (28), un dispositif (30) relié au dispositif de mesure (29) pour l'analyse des valeurs de mesure et un affichage (34) pour l'affichage du passage en dessous d'une valeur résiduelle (g_{Rest}) prédéterminée du poids (g) de la réserve de fil (28), **caractérisé en ce qu'**une plate-forme de mesure mobile (32) est prévue pour la disposition de l'unité de réserve (27) avec la réserve de fil (28) et **en ce que** le dispositif de mesure (29) est disposé entre la plate-forme de mesure (32) et une plate-forme inférieure (36) et conçu pour la mesure du poids (g) de l'unité de réserve (27) avec la réserve de fil (28) en dessous d'une valeur de seuil (gₛ) du poids (g) de l'unité de réserve (27) avec la réserve de fil (28) et pour l'affichage de la valeur de mesure maximale dans le cas d'un passage du poids (g) de l'unité de réserve (27) avec la réserve de fil (28) au-dessus de la valeur seuil (gₛ).

2. Chariot (43) selon la revendication 1, **caractérisé en ce qu'**un dispositif (35) est prévu pour exercer une force antagoniste (F_{gegen}), correspondant à la valeur seuil (gₛ), sur le poids (g) de la plate-forme de mesure (32) avec l'unité de réserve (27) avec la réserve de fil (28), et le dispositif de mesure (29) est conçu pour la mesure du poids (g) de la plate-forme de mesure (32) avec l'unité de réserve (27) avec la réserve de fil (28) en dessous de cette force antagoniste (F_{gegen}) et, lors d'un dépassement du poids (g) de la plate-forme de mesure (32) avec l'unité de réserve (27) avec la réserve de fil (28), la plate-forme de mesure (32) repose sur le châssis (33).

3. Chariot (43) selon la revendication 2, **caractérisé en ce que** le dispositif (35) permettant d'exercer une force antagoniste (F_{gegen}) est constitué d'au moins un élément à ressort (37) disposé de préférence entre le châssis (33) et la plate-forme inférieure (36) avec le dispositif de mesure (29).

4. Chariot (43) selon l'une des revendications 1 à 3, **caractérisé en ce que** le dispositif de mesure (29) comprend des jauges de contrainte.

5. Chariot (43) selon l'une des revendications 1 à 4, **caractérisé en ce qu'**un dispositif (38) est prévu pour la détection d'un élément d'identification (30) se trouvant sur l'unité de réserve (27), cette unité de détection (38) étant reliée au dispositif de mesure (29) ou au dispositif d'analyse (30).

6. Chariot (43) selon l'une des revendications 1 à 5, **caractérisé en ce que** le dispositif de mesure (29) est relié à une interface (39) permettant de transmettre les valeurs de mesure du poids (g) au dispositif d'analyse (30) ou à un réseau de données.

7. Chariot (43) selon la revendication 6, **caractérisé en ce que** l'interface (39) est constituée d'une connexion (40) pour la transmission filaire des valeurs de mesure du poids (g) au dispositif d'analyse (30) ou au réseau de données.

8. Chariot (43) selon l'une des revendications 1 à 7, **caractérisé en ce que** le dispositif d'analyse (30) est conçu pour calculer la longueur (1) de la réserve de fil (28) sur la base du poids (g) mesuré et des données caractéristiques enregistrées.

9. Chariot (43) selon l'une des revendications 1 à 8, **caractérisé en ce qu'**une mémoire (41) est prévue pour l'enregistrement des valeurs de mesure.

10. Chariot (43) selon l'une des revendications 1 à 9, **caractérisé en ce qu'**au moins un élément d'accueil (45) est prévu pour l'accueil sur une contre-pièce correspondante.

11. Procédé de mesure du poids d'une réserve de fil (28) se trouvant dans une unité de réserve (27), cette unité de réserve (27) avec la réserve de fil (28) étant disposées, sur une plate-forme de mesure mobile (32) d'un chariot (43) selon l'une des revendications 1 à 10, **caractérisé en ce que** le poids (g) de l'unité de réserve (27), avec la réserve de fil (28), est mesuré avec un dispositif de mesure (29) disposé entre la plate-forme de mesure mobile (32) et une plate-forme inférieure (36) et entré dans un dispositif d'analyse (30), la mesure du poids (g) de l'unité de réserve (27) avec la réserve de fil (28) en dessous d'une valeur de seuil (gₛ) du poids (g) étant effectuée, tandis que, lors d'un dépassement de la valeur de seuil (gₛ) du poids (g), la valeur de mesure maximale est affichée et le passage en dessous d'une valeur résiduelle (g_{Rest}) prédéterminée du poids (g) de la réserve de fil (28) est affiché.

12. Procédé selon la revendication 11, **caractérisé en ce que** la valeur de seuil (gs) du poids est réglée par l'application d'une force antagoniste (F_{gegen}) sur l'unité de réserve (27) avec la réserve de fil (28) et la mesure du poids (g) de l'unité de réserve (27) avec la réserve de fil (28) n'est effectuée que lors du passage du poids de l'unité de réserve (27) avec la réserve de fil (28) en dessous de la valeur de seuil (gs), l'unité de réserve (27) étant soulevée par la force antagoniste (F_{gegen}).

13. Procédé selon la revendication 11 ou 12, **caractérisé en ce que** les données caractéristiques de l'unité de réserve (27) et de la réserve de fil (28), par exemple le poids à vide de l'unité de réserve (27), la longueur de la réserve de fil (28), le matériau et le diamètre du fil ou autres sont entrées, calculées et/ou sélectionnée et entrées dans le dispositif d'analyse (30).

14. Procédé selon la revendication 11 ou 12, **caractérisé en ce que** les données caractéristiques de l'unité de réserve (27) et de la réserve de fil (28) sont déterminées automatiquement et entrées dans le dispositif d'analyse (30).

15. Procédé selon la revendication 14, **caractérisé en ce que** les données caractéristiques de l'unité de réserve (27) et de la réserve de fil (28) sont déterminées automatiquement à l'aide d'un élément d'identification (31) disposé sur l'unité de réserve (27) et entrées dans le dispositif d'analyse (30).

16. Procédé selon l'une des revendications 13 à 15, **caractérisé en ce que**, à partir du poids (g) déterminé de l'unité de réserve (27) avec la réserve de fil (28), la longueur actuelle de la réserve de fil (28) est calculée en tenant compte des données caractéristiques de l'unité de réserve (27) et de la réserve de fil (28).

17. Procédé selon l'une des revendications 11 à 16, **caractérisé en ce que**, lors du passage du poids de la réserve de fil (28) en dessous de la valeur résiduelle (g_{Rest}) prédéterminée, un changement automatique de l'unité de réserve (27) est effectué ou initié.
